Europäisches Patentamt

European Patent Office

Office européen des brevets

(11) Publication number: **0 098 172**
**B1**

# EUROPEAN PATENT SPECIFICATION

(45) Date of publication of patent specification: **10.05.89**

(21) Application number: **83303789.8**

(22) Date of filing: **30.06.83**

(51) Int. Cl.⁴: **G 06 F 9/30, G 06 F 9/44**

(54) **Register control processing system.**

(30) Priority: **30.06.82 JP 113470/82**

(43) Date of publication of application:
**11.01.84 Bulletin 84/02**

(45) Publication of the grant of the patent:
**10.05.89 Bulletin 89/19**

(84) Designated Contracting States:
**DE FR GB**

(56) References cited:
**FR-A-2 308 987**

(73) Proprietor: **FUJITSU LIMITED**
**1015, Kamikodanaka Nakahara-ku**
**Kawasaki-shi Kanagawa 211 (JP)**

(72) Inventor: **Matsumoto, Toshio c/o Fujitsu Limited**
**Patent Department 1015 Kamikodanaka**
**Nakahara-ku Kawasaki (JP)**
Inventor: **Kato, Motokazu c/o Fujitsu Limited**
**Patent Department 1015 Kamikodanaka**
**Nakahara-ku Kawasaki (JP)**
Inventor: **Sato, Kiyosumi c/o Fujitsu Limited**
**Patent Department 1015 Kamikodanaka**
**Nakahara-ku Kawasaki (JP)**
Inventor: **Mizushima, Yoshihiro c/o Fujitsu Limited**
**Patent Department 1015 Kamikodanaka**
**Nakahara-ku Kawasaki (JP)**
Inventor: **Ohnishi, Katsumi c/o Fujitsu Limited**
**Patent Department 1015 Kamikodanaka**
**Nakahara-ku Kawasaki (JP)**

(74) Representative: **Sunderland, James Harry et al**
**HASELTINE LAKE & CO Hazlitt House 28**
**Southampton Buildings Chancery Lane**
**London WC2A 1AT (GB)**

Courier Press, Leamington Spa, England.

## Description

This invention relates to a register control system in a data processing system. Briefly, this invention provides a register control system which, in a case in which a control register is newly defined or in which a control register defined to be used for a particular purpose is used also for another purpose, control registers are realized on memory without relation to the actual provision of control registers as hardware and thereby control register operations can be executed as if control registers not provided as hardward were actually so provided.

A central processing unit CPU of a certain architecture, for example, is capable of designating 16 control registers in total each of which is composed of 32 bits. Each bit of these registers is used for indicating a state occurring during operation or providing special data for performing a certain function. However, in reality, a particular model of a particular type actually has provided only the registers necessary for functions defined initially. For this reason, when expansion of functions is required, or in order to maintain compatibility with other types of system, the hardware must be modified to meet each requirement involved, including, for example, the addition of registers. However, modification of hardware is economically disadvantageous. Moreover, control registers already defined may be required in some cases to be used for other purposes. For example, in a case in which a certain control register used for a certain purpose in a certain system is used for another purpose another system, if the former system is required to maintain compatibility with the latter system, the one register must be used in different ways, to meet the two different purposes, as required. This problem cannot be solved by hardware alone.

It is an object of the present invention to solve the above-described problem and for this purpose the invention additionally defines control registers in memory. Moreover, a particular instruction execution routine is called upon detection of a LOAD instruction (hereinafter, and LCTL instruction) concerning control registers. In the instruction execution routine, contents to be loaded are, in general, written into the designated control register both in hardware and in memory. However, in a case in which a control register is to be used simultaneously for two different purposes, the contents to be loaded are not written into the hardware control register. In these circumstances, when writing into the pertinent hardware control register is required, such operation is carried out by means of another instruction, not by the LCTL instruction.

In a case in which a STORE instruction (hereinafter SCTL instruction) relating to control registers is detected, the instruction execution routine is called in the same way. In the instruction execution routine, contents are read out of the designated control register defined on the memory and then witten into a designated memory area. At this time, data is not read from the hardware control register.

According to the present invention there is provided a register control processing system comprising:

one or more real registers provided in a processing unit, one or more virtual registers corresponding 1:1 to said real registers, provided in memory,

a means for detecting a load instruction or a store instruction for the registers,

a write means, operable to write the same contents to both a designated real register and the corresponding virtual register, in response to detection of a load instruction, and

a read means, operable to read from a virtual register only, in response to detection of a store instruction.

In the system at least one further virtual register, not corresponding to one of said real registers, may also be provided in memory.

The said write means may be operable, to write the same contents to both a designated real register and the corresponding virtual register, in a case in which the designated real register is not required to be used simultaneously for two different purposes, and also operable to write such contents only to the corresponding virtual register, in a case in which the designated real register is required to be used simultaneously for two different purposes.

The said real registers may be less in number than the number of registers which can be designated by register designation data, and said virtual registers may be equal in number to the number of registers which can be designated by the register designation data, and the system operable for some instructions, for example a load instruction, to execute the same processing in relation to both real and virtual registers without reference to register designation data to distinguish between real and virtual registers, and for other instructions, for example a store instruction, to execute processing only in relation to the virtual registers.

Reference is made, by way of example, to the accompanying drawings, in which:-

Fig. 1 is a block diagram indicating the basic structure of an embodiment of this invention.

Fig. 2 is a detail profile of firmware part 5 of Fig. 1.

Fig. 3 is a flow chart indicating firmware processing.

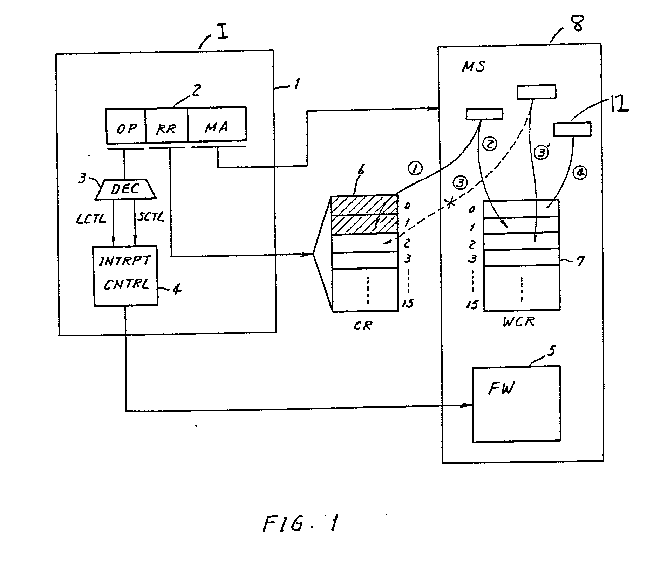

Fig. 1 illustrates basic structure of a embodiment of this invention. In this Figure, 1 is an instruction control part unit 1 in a central processing unit CPU. 2 is an instruction register. 3 is a decoder which detects LCTL and SCTL instructions. 4 is an interrupt generating circuit. 5 is a particular instruction execution firmware routine FW. 6 indicates control registers CR provided in the CPU. 7 indicates control registers WCR defined on memory. 8 is a memory MS. The CPU comprises also an E (execution) unit which executes operation by receiving control information from the I unit, and an S unit which controls interfacing between the I unit, the E unit and MS. Those units can be replaced with others, as used in well-known computer systems, are not important to the present invention, and thus are not described.

In general, an instruction consists of an operation code field OP, a register designation field RR and a field for designating a memory address MA, etc.

Instructions relating to control registers include LCTL and SCTL instructions.

LCTL is an instruction to load the contents of a memory address designated by the MA field of the instruction into the control register designated by the RR field.

On the other hand, SCTL is an instruction to store the contents of the control register designated by the RR field of the instruction into the memory address designated by the MA field.

In addition to these instructions (LCTL, SCTL), there are provided:-

an instruction for making reference only to a control register and executing specified processing, and

an instruction for sending or receiving data between a general purpose register (not shown) in CPU and a control register.

Program execution modes include an OS mode in which an ordinary instruction is executed directly by the hardware and micro-program, and a firmware mode in which special instructions (which cannot be executed by the hardware or micro-program) are executed by routines formed by combination of ordinary instructions.

The LCTL, SCTL instructions are ordinary instructions which can be executed in the OS mode but these are executed in the firmware mode in this invention.

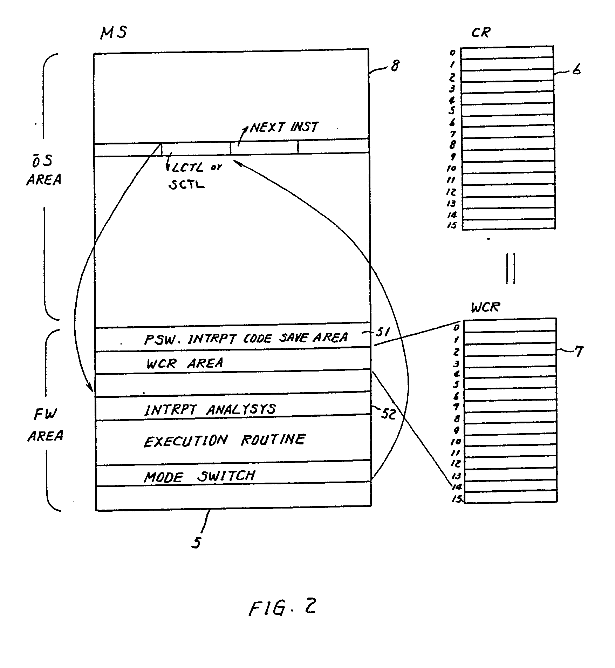

Fig. 2 indicates the internal structure of firmware 5 shown in Fig. 1.

An example of processing in accordance with LCTL and SCTL instructions is explained hereunder.

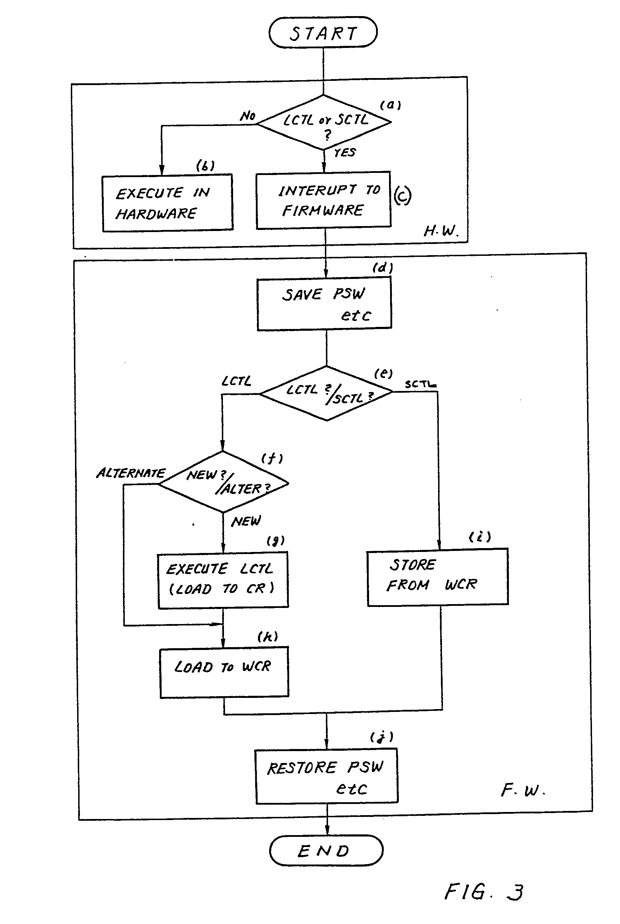

When the decoder 3 of the I unit detects an LCTL instruction under the OS mode, the instruction is not executed and an interrupt to the firmware 5 is generated by the interrupt generating circuit 4. At this time, in the interrupt generating circuit 4, data such as a program status word PSW and an interrupt code, which indicates the cause of the interrupt, is stored in a firmware FW region 51 so that initial processing can be continued after execution of firmward routine 5 refer to Fig. 3), and the program execution mode is changed from the OS mode to the firmware mode (hereinafter called the FW mode). An interrupt analysis processing step 52 in the firmware 5 analyses the interruption and starts execution of the LCTL instruction after recognizing that the interrupt was generated by (caused by) the LCTL instruction.

First, the firmward generates an LCTL instruction which is the same as the LCTL instruction mentioned above. Thereby, ① (see Fig. 1) the contents to be loaded are written into the designated register among the control registers CR0 to CR15 existing in the hardware. Here, if a control register CR not actually existing in the hardware is designated, entry into the register is not, of course, carried out, but the instruction itself is normally executed. However, ③ (see Fig. 1) if a hardware control register which is required to be used simultaneously for two purposes is designated, loading into the control register (CR) is inhibited. When contents are required to be loaded to this control register (CR), the loading is carried out by using other instructions as an alternative to the LCTL instruction. For example, the instruction for loading the general purpose register from memory or the instruction for writing to the control register CR from the general purpose register.

Then, ② ③' the contents of the address designated by the MA field of the LCTL instruction are written into the designated register among the control registers WCR0 to WCR15 defined on the memory, by a MOVE instruction, and LCTL instruction execution is completed. Thereby, the contents of the CR and WCR registers become the same, except for the special control registers (to be used for two purposes) described above and control registers not existing in the hardware.

Moreover, the PSW stored upon interruption is read from the region 51 (Fig. 2) in order to continue processing and the operation mode is returned to OS mode, from FW mode (refer to Fig. 3).

As in the case of the LCTL instruction, when the decoder 3 of the I unit detects the SCTL instruction, an interrupt is generated to firmware 5 and the operation mode changes from OS mode to FW mode. In the SCTL instruction execution routine, ④ (see Fig. 1) the contents of a designated register among the registers WCR0 to WCR15 of the register 7 defined on memory are written into an address 12 designated in the operand field of the SCTL instruction using a MOVE instruction, and thereby execution of the SCTL instruction is completed. At this time, since the latest control register contents are stored in registers WCR0 to WCR15 defined on memory, it is not required to read data from control registers 6.

In addition, the PSW stored upon interruption is read from the region 51, the operation mode is changed to OS mode from FW mode, and the instruction following the SCTL instruction is called. Thereby the processing is continued.

Fig. 3 is a flow chart indicating the above described firmware operations. First (a) each instruction in the OS mode is checked to determine if its instruction code is LCTL or SCTL. If it is neither, (b) it is processed by hardware (including processing by microinstructions). (c) If an instruction is either an LCTL or an SCTL instruction interruption to firmware is started. These operations are carried out by hardware or micro program.

With the firmware started, first, (d) the processing required for saving PSW and an interrupt code is executed, (e) it is then determined whether the instruction is LCTL or SCTL. (f) When the instruction is an LCTL instruction, it is checked whether the control register designated is newly defined (NEW?) or to be used for another purpose (ALTERNATE?). This can be done by referring to the saved PSW or to a special control register. (g) When a control register designated is newly defined, the LCTL instruction to the register is here executed. When this instruction is detected under the firmward mode, it is immediately executed. This function is intrinsically provided in the hardware. Loading to the registers on the hardware terminates by execution of the LCTL instruction. Thereafter, (h) loading is also carried out to the control registers WCR defined on memory. In step (f), if an existing register is designated which is to be used for another purpose, processing moves to step (h), skipping step (g). Moreover, in step (e), when an instruction is an SCTL instruction, (i) data is stored from a register WCR using a MOVE instruction only.

As explained above, 16 virtual registers in total are provided as WCR0 to WCR15 and thereby the same content is loaded to both real and virtual control registers even when the real registers (CR0 to CR15) exist. Therefore, it is no longer necessary to distinguish the real and virtual registers by checking register numbers and accordingly control can be realized easily.

## Claims

1. A register control processing system comprising:
   one or more real registers (CR0 to CR15) provided in a processing unit (CPU), one or more virtual registers (WCR0 to WCR15) corresponding 1:1 to said real registers, provided in memory (MS),
   a means (3) for detecting a load instruction (LCTL) or a store instruction (SCTL) for the registers,
   a write means, operable to write the same contents to both a designated real register and the corresponding virtual register, in response to detection of a load instruction (LCTL), and
   a read means, operable to read from a virtual register only, in response to detection of a store instruction (SCTL).

2. A system as claimed in claim 1, comprising at least one further virtual register, not corresponding to one of said real registers, also provided in memory (MS).

3. A system as claimed in claim 1, wherein the said write means are so operable, to write the same contents to both a designated real register and the corresponding virtual register, in a case in which the designated real register is not required to be used simultaneously for two different purposes, and wherein the write means are also operable to write such contents only to the corresponding virtual register, in a case in which the designated real register is required to be used simultaneously for two different purposes.

4. A system as claimed in claim 1, wherein said real registers (CR0 to CR15) are less in number than the number of registers which can be designated by register designation data, and said virtual registers (WCR0 to WCR15) are equal in number to the number of registers which can be designated by the register designation data, and the system is operable for some instructions, for example a load instruction (LCTL), to execute the same processing in relation to both real and virtual registers without reference to register designation data to distinguish between real and virtual registers, and for other instructions, for example a store instruction (SCTL), to execute processing only in relation to the virtual registers.

## Patentansprüche

1.     Registersteuerungs-Verarbeitungssystem mit:
   einem oder mehreren realen Registern (CCR0 bis CR15), die in einer Verarbeitungseinheit (CPU) vorgesehen sind, einem oder mehreren virtuellen Registern (WCR0 bis WCR15), die 1:1 den genannten realen Registern entsprechen, die in dem Speicher (MS) vorgesehen sind,
   einer Einrichtung (3) zum Detektieren einer Ladeinstruktion (LCTL) oder einer Speicherinstruktion (SCTL) für die Register,
   einer Schreibeinrichtung, die betreibbar ist, um denselben Inhalt in beide, ein designiertes reales Register und das entsprechende virtuelle Register, zu schreiben, in Abhängigkeit von der Feststellung der Ladeinstruktion (LCTL), und
   einer Leseeinrichtung, welche betreibbar ist, um lediglich aus dem virtuellen Register zu lesen, in Abhängigkeit von der Feststellung einer Speicherinstruktion (SCTL).

2. System nach Anspruch 1 mit wenigstens einem weiteren virtuellen Register, welches nicht einem der genannten realen Register enspricht, welches ebenfalls in dem Speicher (MS) vorgesehen ist.

3. System nach Anspruch 1, bei dem die genannte Schreibeinrichtung so betreibbar ist, daß sie denselben Inhalt sowohl in ein designiertes reales Register als auch in das entsprechende virtuelle Register schreibt, in einem Fall, in dem das designierte reale Register nicht gleichzeitig für zwei verschiedene Zwecke verwendent werden muß, und bei dem die Schreibeinrichtung auch betreibbar ist, um solch einen Inhalt lediglich in das entsprechende virtuelle Register zu schreiben, in einem Fall, in dem das designierte reale Register gleichzeitig für zwei verschiedene Zwecke verwendet werden muß.

4. Verfahren nach Anspruch 1, bei dem die Anzahl der realen Register (CR0 bis CR15) kleiner als die Anzahl der Register ist, die durch die Registerbestimmungsdaten bestimmt werden können, und die Anzahl der genannten virtuellen

Register (WCR0 bis WCR15) gleich der Anzahl der Register ist, die durch die Registerbestimmungsdaten designiert werden können, und das System für einige Instruktionen, zum Beispiel eine Ladeinstruktion (LCTL), betreibbar ist, um dieselbe Verarbeitung in Relation sowohl auf die realen als auch die virtuellen Register auszuführen, ohne Bezug auf Registerbestimmungsdaten, um zwischen realen und virtuellen Registern zu unterscheiden, und für andere Instruktionen, zum Beispiel eine Speicherinstruktion (SCTL), um die Verarbeitung lediglich in Bezug auf die Virtuellen Register auszuführen.

**Revendications**

1. Système de traitement de commande de registres comprenant:
un ou plusieurs registres réels (CR0 à CR15) prévus dans une unité de traitement (CPU), un ou plusieurs registres virtuels (WCR0 à WCR15) en correspondance univoque avec les registres réels, prévus en mémoire (MS),
un moyen (3) pour détecter une instruction de chargement (LCTL) ou une instruction de mémorisation (SCTL) pour les registres,
un moyen d'écriture, pouvant être mis en fonctionnement pour écrire le même contenu à la fois dans un registre réel indiqué et dans le registre virtuel correspondant, en réponse à la détection d'une instruction de chargement (LCTL), et
un moyen de lecture, pouvant être mis en fonctionnement pour ne faire une lecture que dans un registre virtuel, en réponse à la détection d'une instruction de mémorisation (SCTL).

2. Système selon la revendication 1, comprenant au moins un autre registre virtuel, ne correspondant pas à un des registres réels, prévu également en mémoire (MS).

3. Système selon la revendication 1, dans lequel le moyen d'écriture peut être ainsi mis en fonctionnement pour écrire le même contenu à la fois dans un registre réel indiqué et dans le registre virtuel correspondant, dans le cas où le registre réel indiqué n'est pas demandé pout son utilisation simultanément dans deux buts différents, et dans lequel le moyen d'écriture peut être également mis en fonctionnement pour n'écrire ce contenu que dans le registre virtuel correspondant, dans le cas où le registre réel indiqué est demandé pour son utilisation simultanément dans deux buts différents.

4. Système selon la revendication 1, dans lequel les registres réels (CR0 à CR15) sont en nombre inférieur au nombre de registres qui peuvent être indiqués par des données d'indication de registres, et les registres virtuels (WCR0 à WCR15) sont égaux en nombre au nombre de registres qui peuvent être indiqués par les données d'indication de registres, et le système peut être mis en fonctionnement pour certaines instructions, par exemple, une instruction de chargement (LCTL), pour exécuter le même traitement par rapport aux registres réels et aux registres virtuels à la fois sans référence aux données d'indication de registres pour faire une distinction entre les registres réels et les registres virtuels, et pour d'autres instruction, par exemple une instruction de mémorisation (SCTL), pour n'exécuter qu'un traitement en rapport avec les registres virtuels.

FIG. 1

# EP 0 098 172 B1

FIG. 2

START

(a) LCTL or SCTL ?

No → (b) EXECUTE IN HARDWARE

YES → (c) INTERUPT TO FIRMWARE

H.W.

(d) SAVE PSW etc

(e) LCTL ? / SCTL ?

LCTL → (f) NEW ? / ALTER ?

SCTL → (i) STORE FROM WCR

ALTERNATE

NEW → (g) EXECUTE LCTL (LOAD TO CR)

(h) LOAD TO WCR

(j) RESTORE PSW etc

F.W.

END

FIG. 3

3